# FASCICULE DE BREVET EUROPEEN

(11) **EP 3 763 552 B1**
(45) Date de publication et mention de la délivrance du brevet: **02.08.2023**
(21) Numéro de dépôt: 20182358.0
(22) Date de dépôt: 25.06.2020
(51) Int. Cl.: B60C 23/04, B29D 30/00

(54) **PROCEDE DE FIXATION D'UN SUPPORT DE CAPTEUR DANS UN PNEU**
VERFAHREN ZUR BEFESTIGUNG EINER SENSORHALTERUNG IN EINEM REIFEN
METHOD FOR ATTACHING A SENSOR SUPPORT IN A TYRE

(30) Priorité: 08.07.2019 FR 1907601
(43) Date de publication de la demande: 13.01.2021
(73) Titulaire: HUTCHINSON, 75008 Paris (FR)
(72) Inventeur: HARTENSTEIN, Gilles, 80480 Salouel (FR); FUGERAY, Louise, 57000 Metz (FR); REUCHER, Julie, 22140 Cavan (FR)
(74) Mandataire: Plasseraud IP

(56) Documents cités:
- WO-A1-2019/002712
- DE-A1-102007 033 302
- DE-A1-102014 213 060

## Description

### DOMAINE TECHNIQUE

La présente invention est relative à un procédé de fixation d'un support de capteur dans un pneu, tel qu'un capteur de pression interne du pneu.

### ETAT DE LA TECHNIQUE ANTERIEURE

Plus particulièrement, l'invention est un procédé de fixation d'un support de capteur dans un pneu dans lequel :
- on fournit un pneu,
- on fournit un support de capteur ayant un logement dans lequel un capteur est destiné à être fixé.

On connaît de tels sous -ensembles qui sont fixés à l'intérieur du pneu par l'utilisation d'adhésif nécessitant un nettoyage intensif d'une portion interne du pneu et éventuellement une abrasion de cette portion interne.

On applique alors un adhésif sur cette portion interne du pneu et on applique le support de capteur en chauffant ce sous-ensemble pour assurer une adhésion résistante du support de capteur au pneu.

La mise-en-oeuvre de ce procédé est contraignante et risquée à cause d'une éventuelle dégradation des caractéristiques de tenue du pneu, notamment dans une région autour de ladite portion interne du pneu.

Le document WO 2019/002712 propose un pneu muni d'un objet fixé sur ce pneumatique par une couche adhésive silicone d'une épaisseur comprise entre 1 et 5 mm.

Le document DE 10 2014 213060 propose un procédé d'assemblage d'un module dans un pneu avec un adhésif.

Le document DE 10 2007 033302 propose un outil pour exercer une force de compression.

### EXPOSE DE L'INVENTION

La présente invention, définie dans la revendication indépendante 1, a pour but de proposer un procédé alternatif de fixation d'un support de capteur qui permette une mise-en-oeuvre plus simple.

A cet effet, le procédé de fixation du support de capteur dans le pneu est modifié dans le sens que :
- le support de capteur a une surface inférieure pourvue d'un adhésif adapté pour coller le support de capteur au pneu, et
   dans lequel l'adhésif est un adhésif sensible à la pression avec une base au silicone, et l'adhésif a une épaisseur comprise entre 30 µm et 600 µm, et que
- on applique la surface inférieure du support de capteur sur une portion interne du pneu avec une pression comprise entre 0,05 MPa et 1 MPa pendant une durée inférieure à 1 minute pour fixer ledit support de capteur au pneu.

Grâce à ces dispositions, on assure que le support de capteur est fixé rapidement de manière très résistante au pneu.

Dans divers modes de réalisation du procédé selon l'invention, on peut éventuellement avoir recours en outre à l'une et/ou à l'autre des dispositions suivantes.

Selon un aspect, l'application du support de capteur à la portion interne du pneu est effectuée à température ambiante sans apport de chaleur, c'est-à-dire entre 15 °C et 35°C.

Selon un aspect, l'application du support de capteur à la portion interne du pneu est effectuée par l'intermédiaire d'un outil adapté pour appliquer ladite pression entre le support de capteur et le pneu.

Selon un aspect, l'outil est aussi adapté pour positionner le support de capteur par rapport au pneu.

Selon un aspect, avant l'application du support de capteur à la portion interne du pneu, on nettoie ladite portion interne du pneu, par un produit de nettoyage de pneu.

Selon un aspect, le produit de nettoyage de pneu est compris dans une liste incluant de l'eau, de l'eau chaude, de l'eau avec un solvant, un solvant.

Selon un aspect, le support de capteur comprend en outre un film de protection sur l'adhésif, l'adhésif étant alors entre ladite surface inférieure et ledit film de protection pour le protéger de l'environnement extérieur avant l'application du support de capteur à la portion interne du pneu, et ledit film de protection est retiré du support de capteur immédiatement avant l'application du support de capteur à la portion interne du pneu, moins de 5 minutes avant ladite application.

Selon un aspect, le support de capteur comprend une enveloppe réalisée par au moins un procédé de moulage.

Selon un aspect, l'enveloppe est réalisée en un polymère, tel qu'un élastomère, caoutchouc ou caoutchouc naturel.

Selon un aspect, la surface inférieure comprend des rugosités réalisées par la surface correspondante du moule.

Selon un aspect, le support de capteur est réalisé par les étapes de fabrication successives suivantes :
- on réalise une enveloppe de support de capteur,
- on nettoie la surface inférieure de ladite enveloppe de support de capteur par un produit de nettoyage de support de capteur, ledit produit de nettoyage de support étant un solvant, et
- on applique l'adhésif sur ladite surface inférieure précédemment nettoyée.

Selon un aspect, le support de capteur est réalisé par les étapes de fabrication successives suivantes :
- on réalise une enveloppe de support de capteur, et
- on effectue une abrasion de la surface inférieure de ladite enveloppe de support de capteur et on évacue de ladite surface inférieure des résidus de ladite abrasion précédente, et
- on applique l'adhésif sur ladite surface inférieure précédemment abrasée.

Selon un aspect, le support de capteur est réalisé en appliquant l'adhésif à la surface inférieure d'une enveloppe de support de capteur immédiatement après la fabrication de ladite enveloppe de support de capteur par un procédé de moulage, moins de 5 minutes après ledit moulage.

Selon un aspect du procédé :
- on fournit un capteur adapté pour mesurer au moins une grandeur physique dans le pneu, et
- on fixe le capteur dans le support de capteur pour former un sous-ensemble avant l'application de la surface inférieure du support de capteur sur la portion interne du pneu pour coller le support de capteur et ledit sous-ensemble au pneu.

Selon un aspect du procédé :
- on fournit un capteur,
- on fournit une enveloppe de support de capteur,
- on fixe le capteur dans l'enveloppe de support de capteur, et
- on ajoute l'adhésif sur la surface inférieure pour former un sous-ensemble avant l'application de la surface inférieure du support de capteur sur la portion interne du pneu pour coller le support de capteur et ledit sous-ensemble au pneu.

Selon un aspect du procédé :
- on fournit un capteur adapté pour mesurer au moins une grandeur physique dans le pneu, et
- on fixe le capteur dans le support de capteur après l'application de la surface inférieure du support de capteur sur la portion interne du pneu pour coller le support de capteur au pneu.

### BREVE DESCRIPTION DES DESSINS

D'autres caractéristiques et avantages de l'invention apparaîtront au cours de la description suivante d'un ou plusieurs de ses modes de réalisation, donnés à titre d'exemples non limitatifs, en regard des dessins joints.

Sur les dessins :
- la figure 1 est un schéma présentant un support de capteur à fixer sur un pneu, et
- la figure 2 montre un exemple de résultat d'un test montrant l'évolution de la force d'arrachement en fonction de la quantité d'adhésif et de la pression.

### DESCRIPTION DETAILLEE

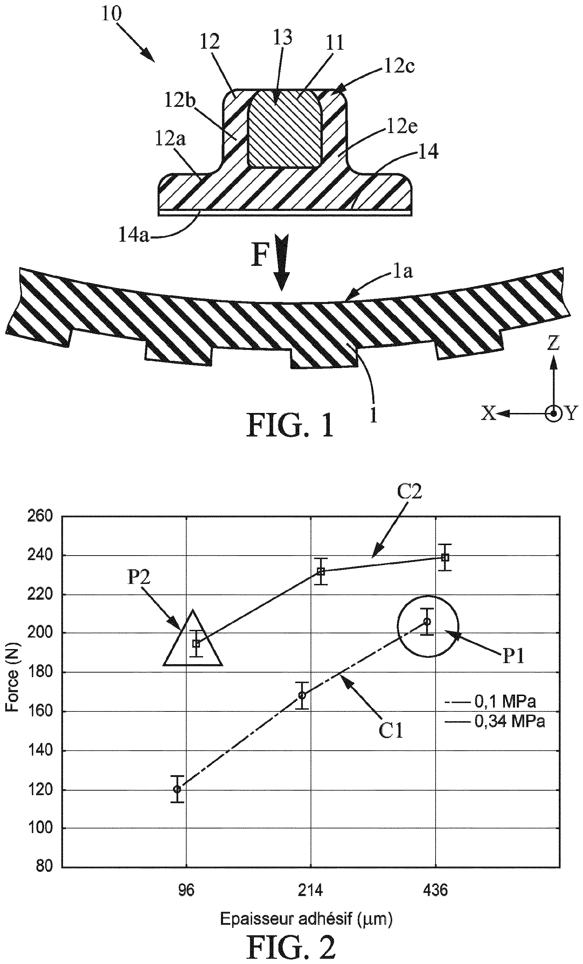

La **figure 1** est une vue montrant une portion d'une section d'un pneu 1 et d'un support de capteur 12 destiné à être fixé sur une surface intérieure 1a du pneu 1. Sur cette figure, le pneu 1 est en section longitudinale (coupe dans un plan XZ), c'est-à-dire dans un plan perpendiculaire à la direction transversale Y qui correspond à l'axe de rotation usuel de la roue.

Le support de capteur 12 comprend un logement 13 dans lequel un capteur 11 est destiné à être fixé. Le capteur 11 est adapté pour mesurer au moins une grandeur physique à l'intérieur du pneu.

Le capteur 11 est par exemple un capteur qui mesure une grandeur physique de type :
- pression du gaz à l'intérieur du pneu, ou
- température du gaz à l'intérieur du pneu, ou
- température du pneu 1 lui-même, ou
- contrainte mécanique subie par le pneu 1, ou
- pression entre le pneu et la route, ou
- position, vitesse ou accélération du véhicule par rapport à la route, ou
   de tout autre type de grandeur physique.

Le capteur 11 peut éventuellement effectuer une ou plusieurs mesures de toute combinaison des grandeurs physiques citées ci-dessus.

Le capteur 11 est fixé au support de capteur 12 par tout moyen mécanique, magnétique ou chimique.

Par exemple, le capteur 11 peut être vissé sur le support de capteur 12. Eventuellement, le capteur 11 peut être clipsé (emboîtage élastique) sur le support de capteur 12). Eventuellement, le capteur 11 peut être enchâssé ou emboîté dans le logement de capteur 13 du support de capteur 12. Eventuellement, le capteur 11 est collé ou additionnement collé au support de capteur 12.

Selon une première variante, le capteur 11 est fixé dans le logement de capteur 13 après que le support de capteur soit fixé au pneu 1.

Selon une seconde variante, le capteur 11 est fixé dans le logement de capteur 13 avant que le support de capteur 12 ne soit fixé au pneu 1. On forme ainsi premièrement un sous-ensemble 10 comprenant le capteur 11 et le support de capteur 12, puis on fixe ce sous-ensemble 10 au pneu 1.

Par exemple, le support de capteur 12 est réalisé avec un matériau ayant une élasticité, et le logement 13 du support de capteur 12 comprend un rétrécissement 12c. Le capteur 11 peut ainsi être introduit en force dans le logement 13 et le rétrécissement 12c maintient le capteur 11 à l'intérieur du logement 13.

Par exemple, comme représenté en figure 1, le support de capteur 12 comprend une base 12a, et une projection 12b s'étendant sensiblement perpendiculairement depuis une surface supérieure (dans la direction Z positive) de la base 12a. Par exemple, la base 12a a une forme de disque, et la projection 12b a sensiblement une forme de cylindre dont le diamètre intérieur correspond au logement de capteur 13.

Le support de capteur 12 comprend une enveloppe de support de capteur 12e et une surface inférieure 14 (dans la direction Z négative) pourvue d'un adhésif 14a adapté pour coller le support de capteur 12 ou le sous-ensemble 10 à la surface intérieure 1a du pneu 1. La surface inférieure 14 peut être plane ou éventuellement incurvée, par exemple pour s'adapter à la forme de la surface intérieure 1a du pneu. La surface inférieure 14 est une surface inférieure du support de capteur 14 et/ou une surface inférieure de l'enveloppe de support de capteur 12e.

Premièrement, le support de capteur 12 est alors apte à être collé à la surface intérieure 1a du pneu 1 grâce au fait que l'adhésif 14a est un adhésif sensible à la pression (PSA). Cet adhésif 14a a une base de type silicone. Cet adhésif 14a présente une épaisseur comprise entre 30 µm et 600 µm.

Deuxièmement, le support de capteur 12 ou le sous-ensemble 10 est alors fixé ou collé à la surface intérieure 1a du pneu 1 en appliquant la surface inférieure 14 du support de capteur sur une portion interne du pneu (une portion de la surface intérieure 1a), avec une pression comprise entre 0,05 MPa et 1 MPa pendant une durée inférieure à 1 minute. Cette étape est représentée en figure 1 par la flèche F amenant le support de capteur 12 ou le sous-ensemble 10 vers la portion de la surface intérieure 1a du pneu 1.

La portion interne du pneu représenté en figure 1 est par exemple une partie de la surface intérieure 1a de la bande de roulement du pneu. Avantageusement, cette portion interne est située dans le plan médian ou à proximité du plan médian du pneu 1. Par exemple, le support de capteur 12 ou sous-ensemble 10 est fixé à une distance de ce plan médian inférieure à une largeur dudit support de capteur 12, et de préférence une distance inférieure à la moitié de la largeur du support de capteur 12. Ainsi, la portion interne de fixation du support de capteur 12 est dans une portion sensiblement plane ou légèrement cylindrique de la surface intérieure 1a du pneu.

Un adhésif sensible à la pression (PSA) est un adhésif capable d'adhérer des éléments par contact entre lesdits éléments (ici le support de capteur et le pneu), sans réaction chimique dudit adhésif. La performance de l'adhésion est liée à sa pégosité (ou tack) que l'on étudie par un test d'adhérence durant lequel on mesure les variations de déformation d'un adhésif placé entre deux pistons en fonction de la force développée pour les décoller. La pression initiale avant déformation joue un rôle favorable à la performance de l'adhésion.

Un adhésif sensible à la pression (PSA) avec une base de type silicone est un adhésif consistant généralement en un mélange des composés suivants :
- d'un ou plusieurs polymères silicone possédant des terminaisons silanol, et par exemple des polydiméthylsiloxane (PDMS) ou dérivés tels que de diphenyl siloxanes, et
- d'une ou plusieurs résines siloxanes, et par exemple des résines possédant des fonctionnalisations silanol telles que des résines MQ (c'est-à-dire des résines ayant des unités Me₃SiO et SiO₄) ou des résines MTQ (c'est-à-dire des résines ayant des unités Me₃SiO et MeSiO₃ et SiO₄).

La nature de ces composés et le ratio de leur quantité respective influencent la performance d'adhésion, et notamment la force d'arrachement.

On peut ajouter un agent réticulant comme par exemple du peroxyde ou des systèmes contenant du platine ou des systèmes activés par rayonnement ultraviolet, ce qui permet d'encore modifier les performances d'adhésion.

On peut ajouter des additifs tels que des silanes, des plastifiants, des antioxydants, des colorants ou encore des charges comme des silices. Cela permet d'optimiser les performances d'adhésion, et par exemple de régler des propriétés telles que la cohésion, la résistance au vieillissement, la résistance à divers fluides externes.

Les inventeurs ont trouvé que les conditions précédemment citées permettent d'obtenir une fixation efficace du support de capteur 12 au pneu, c'est-à-dire une fixation apte à résister à un effort d'arrachement par exemple supérieur à 100 N et même de préférence supérieur à 250 N.

Cette performance est inhabituelle et provient de la combinaison des paramètres du choix de l'adhésif qui est particulier, de l'épaisseur de l'adhésif qui est assez importante et de la pression importante exercée sur le support de capteur 12 ou sur le sous-ensemble 10 au moment de son application. Grâce à ces dispositions et malgré une faible durée de l'application (inférieure à 1 minute), la fixation reste performante, i.e. avec un effort à l'arrachement très élevé.

Les inventeurs ont trouvé cet effet technique combinatoire de manière surprenante en testant des centaines de combinaisons de paramètres dont la **figure 2** représente un exemple de résultat.

Cette figure représente des essais effectués avec en ordonnée la force d'arrachement en Newtons et en abscisse l'épaisseur de l'adhésif en micromètres (i.e. la quantité d'adhésif, la surface restant constante dans les essais). Les essais ont été effectués pour deux pressions, une première pression de 0,1 MPa (courbe C1) et une seconde pression de 0,34 MPa (courbe C2).

Ces essais montrent la corrélation entre l'épaisseur de l'adhésif et la pression. En outre, une même performance d'adhésion ou force d'arrachement peut être obtenue avec différentes combinaisons de paramètres. Ainsi, une force d'arrachement de 200 N est obtenue :
- soit avec une épaisseur d'adhésif de 436 µm et une pression de 0,1 MPa appliquée lors de l'assemblage (point P1 de la courbe C1),
- soit avec une épaisseur d'adhésif de 96 µm et une pression de 0,34 MPa appliquée lors de l'assemblage (point P2 de la courbe C2).

En outre, une telle fixation performante n'a pas besoin d'apport de chaleur pour accélérer ou améliorer le collage ou la fixation. Ce procédé de fixation peut être exécuté à température ambiante, par exemple entre 10°C et 40°C, voire entre 15°C et 35°C.

Pour faciliter la fixation du support de capteur 12 ou du sous-ensemble 10 au pneu, il est avantageux d'utiliser un outil (non représenté) qui permet d'appliquer la pression entre ledit support de capteur 12 et la surface intérieure 1a du pneu 1. Notamment, cet outil permet d'appliquer une pression constante et prédéterminée pendant toute la durée d'application pour réaliser la fixation.

L'outil peut être adapté pour également positionner le support de capteur 12 par rapport au pneu 1 ou pour positionner le capteur 11 du sous-ensemble 10 par rapport au pneu 1 ou pour positionner le sous-ensemble 10 par rapport au pneu 1.

Selon une première variante du procédé de fixation :
- avant l'application du support de capteur 12 ou du sous-ensemble 10 à la portion interne du pneu, on nettoie la portion interne du pneu par un produit de nettoyage de pneu.

Le produit de nettoyage de pneu est par exemple adapté pour nettoyer la surface interne du pneu. Il dépend des matériaux utilisés pour la fabrication du pneu, et par exemple des agents de démoulage utilisés dans le moule de pneu afin de faciliter le démoulage.

Le produit de nettoyage de pneu est par exemple de l'eau, ou de l'eau avec un solvant, ou un solvant. Le solvant utilisé est par exemple :
- un alcool tel qu'un éthanol ou isopropanol, ou
- un cétone tel qu'un méthyl éthyl cétone, acétone ou méthylisobutylcétone, ou
- un mélange d'ester synthétiques, ou
- un mélange d'hydrocarbures tels que de l'acétate d'éthyl, du butane, du propane.

Les solvants de type acétone ou méthyl éthyl cétone sont particulièrement efficaces.

Eventuellement, ce nettoyage de la portion interne est effectué avec une action mécanique de frottement sur cette portion interne avec le produit de nettoyage de pneu.

Selon une seconde variante du procédé de fixation, le support de capteur 12 comprend en outre un film de protection posé sur l'adhésif 14a, l'adhésif 14a étant alors positionné entre la surface inférieure 14 et le film de protection. Ce film de protection protège l'adhésif 14a de l'environnement extérieur avant l'application du support de capteur 12 ou du sous-ensemble 10 à la portion interne du pneu 1. Le film de protection est retiré du support de capteur 12 de préférence immédiatement avant l'application du support de capteur 12 ou du sous-ensemble 10 à la portion interne du pneu 1. Par exemple, le film de protection est retiré moins de 5 minutes avant ladite application.

Le support de capteur 12 est par exemple réalisé par des étapes comprenant au moins un procédé de moulage. Notamment, on réalise en premier une enveloppe de support de capteur par ce procédé de moulage. L'enveloppe de support de capteur est par exemple en matériau de type polymère, par exemple élastomère ou un caoutchouc ou caoutchouc naturel. C'est ainsi un matériau adapté au procédé de moulage. Par enveloppe de support de capteur on entend une capsule ou une structure apte à retenir un capteur.

Eventuellement, la surface inférieure 14 comprend des rugosités réalisées par la surface correspondante et complémentaire du moule ayant servi au procédé de moulage du support de capteur 12. Ces rugosités sont par exemple des stries, ou des rainures ou des bosses ou des creux.

Selon une troisième variante du procédé de fixation, le support de capteur 12 est réalisé par les étapes de fabrication successives suivantes :
- on réalise une enveloppe de support de capteur 12e,
- on nettoie la surface inférieure 14 de l'enveloppe de support de capteur 12e par un produit de nettoyage de support de capteur, et
- on applique l'adhésif 14a sur ladite surface inférieure 14.

Par exemple, le produit de nettoyage de support de capteur 12 est un solvant du type déjà cité ci-dessus au sujet du produit de nettoyage de pneu.

Selon une quatrième variante du procédé de fixation, le support de capteur 12 est réalisé par les étapes de fabrication successives suivantes :
- on réalise une enveloppe de support de capteur 12e,
- on effectue une abrasion de la surface inférieure 14 de l'enveloppe de support de capteur 12 et on évacue de la surface inférieure 14 des résidus de ladite abrasion précédente, et
- on applique l'adhésif 14a sur la surface inférieure 14 précédemment abrasée.

Selon une cinquième variante du procédé de fixation, le support de capteur 12 est réalisé en appliquant l'adhésif 14a à la surface inférieure 14 immédiatement après la fabrication d'une enveloppe de support de capteur 12 par un procédé de moulage. Par exemple, l'adhésif 14a est appliqué à la surface inférieure 14 moins de 5 minutes après la fin du moulage de l'enveloppe de support de capteur 12.

Enfin, un film de protection est éventuellement posé sur l'adhésif peu après l'application de l'adhésif 14a sur la surface inférieure 14 de l'enveloppe de support de capteur 12.

Enfin, dans le procédé de fixation, on peut fournir le capteur 11 et le monter dans le support de capteur 12 avant application au pneu. Dans ce cas :
- on fournit un capteur 11, et
- on fixe le capteur 11 dans le support de capteur 12 pour former un sous-ensemble 10 avant l'application de la surface inférieure 14 du support de capteur sur la portion interne du pneu pour coller le support de capteur et ledit sous-ensemble au pneu.

En variante, dans le procédé de fixation, on peut fournir le capteur 11 et le monter dans une enveloppe de support de capteur 12e avant ajout de l'adhésif 14a et avant application au pneu. Dans ce cas :
- on fournit un capteur 11,
- on fournit une enveloppe de support de capteur 12e,
- on fixe le capteur 11 dans l'enveloppe de support de capteur 12, et
- on ajoute l'adhésif 14a sur la surface inférieure 14 pour former un sous-ensemble 10 avant l'application de la surface inférieure 14 du support de capteur sur la portion interne du pneu pour coller le support de capteur 12 et ledit sous-ensemble au pneu 1.

En variante, dans le procédé de fixation, on peut fournir le capteur 11 et le monter dans le support de capteur 12 après application au pneu. Dans ce cas :
- on fournit un capteur 11, et
- on fixe le capteur 11 dans le support de capteur 12 après l'application de la surface inférieure 14 du support de capteur sur la portion interne du pneu pour coller le support de capteur au pneu.

## Revendications

1. **Procédé de fixation** d'un support de capteur dans un pneu dans lequel :
- on fournit un pneu (1),
- on fournit un support de capteur (12) ayant un logement (13) dans lequel un capteur est destiné à être fixé et ayant une surface inférieure (14) pourvue d'un adhésif (14a) adapté pour coller le support de capteur au pneu, et
dans lequel l'adhésif est un adhésif sensible à la pression (PSA) avec une base au silicone,
ledit procédé étant **caractérisé en ce que** l'adhésif a une épaisseur comprise entre 30 µm et 600 µm, et
- on applique la surface inférieure du support de capteur sur une portion interne du pneu avec une pression comprise entre 0,05 MPa et 1 MPa pendant une durée inférieure à 1 minute pour fixer ledit support de capteur au pneu.

2. Procédé selon la revendication 1, dans lequel l'application du support de capteur (12) à la portion interne du pneu est effectuée à température ambiante sans apport de chaleur, c'est-à-dire entre 15 °C et 35°C.

3. Procédé selon la revendication 1 ou la revendication 2, dans lequel l'application du support de capteur (12) à la portion interne du pneu est effectuée par l'intermédiaire d'un outil adapté pour appliquer ladite pression entre le support de capteur et le pneu.

4. Procédé selon la revendication 3, dans lequel l'outil est aussi adapté pour positionner le support de capteur par rapport au pneu.

5. Procédé selon l'une des revendications 1 à 4, dans lequel avant l'application du support de capteur (12) à la portion interne du pneu, on nettoie ladite portion interne du pneu, par un produit de nettoyage de pneu.

6. Procédé selon la revendication 5, dans lequel le produit de nettoyage de pneu est compris dans une liste incluant de l'eau, de l'eau chaude, de l'eau avec un solvant, un solvant.

7. Procédé selon l'une des revendication 1 à 6, dans lequel le support de capteur (12) comprend en outre un film de protection sur l'adhésif, l'adhésif étant alors entre ladite surface inférieure et ledit film de protection pour le protéger de l'environnement extérieur avant l'application du support de capteur à la portion interne du pneu, et ledit film de protection est retiré du support de capteur immédiatement avant l'application du support de capteur à la portion interne du pneu, moins de 5 minutes avant ladite application.

8. Procédé selon l'une des revendications 1 à 7, dans lequel le support de capteur comprend une enveloppe (12e) réalisée par un procédé de moulage.

9. Procédé selon la revendication 8, dans lequel l'enveloppe (12e) est réalisée en un polymère, tel qu'un élastomère, caoutchouc ou caoutchouc naturel.

10. Procédé selon l'une des revendications 8 ou 9, dans lequel la surface inférieure (14) comprend des rugosités réalisées par la surface correspondante du moule.

11. Procédé selon l'une des revendications 1 à 10, dans lequel le support de capteur (12) est réalisé par les étapes de fabrication successives suivantes :
- on réalise une enveloppe de support de capteur (12e),
- on nettoie la surface inférieure de ladite enveloppe de support de capteur par un produit de nettoyage de support de capteur, ledit produit de nettoyage de support étant un solvant, et
- on applique l'adhésif sur ladite surface inférieure précédemment nettoyée.

12. Procédé selon l'une des revendications 1 à 10, dans lequel le support de capteur (12) est réalisé par les étapes de fabrication successives suivantes :
- on réalise une enveloppe de support de capteur (12e), et
- on effectue une abrasion de la surface inférieure de ladite enveloppe de support de capteur et on évacue de ladite surface inférieure des résidus de ladite abrasion précédente, et
- on applique l'adhésif sur ladite surface inférieure précédemment abrasée.

13. Procédé selon l'une des revendication 1 à 10, dans lequel le support de capteur (12) est réalisé en appliquant l'adhésif à la surface inférieure d'une enveloppe de support de capteur immédiatement après la fabrication de ladite enveloppe de support de capteur par un procédé de moulage, moins de 5 minutes après ledit moulage.

14. Procédé selon l'une des revendications 1 à 13, dans lequel :
- on fournit un capteur (11) adapté pour mesurer au moins une grandeur physique dans le pneu, et
- on fixe le capteur (11) dans le support de capteur (12) pour former un sous-ensemble (10) avant l'application de la surface inférieure (14) du support de capteur sur la portion interne du pneu pour coller le support de capteur et ledit sous-ensemble au pneu.

15. Procédé selon l'une des revendications 1 à 13, dans lequel :
- on fournit un capteur (11),
- on fournit une enveloppe de support de capteur (12e),
- on fixe le capteur (11) dans l'enveloppe de support de capteur (12e), et
- on ajoute l'adhésif (14a) sur la surface inférieure (14) pour former un sous-ensemble (10) avant l'application de la surface inférieure (14) du support de capteur sur la portion interne du pneu pour coller le support de capteur et ledit sous-ensemble au pneu.

16. Procédé selon l'une des revendications 1 à 13, dans lequel :
- on fournit un capteur (11) adapté pour mesurer au moins une grandeur physique dans le pneu, et
- on fixe le capteur (11) dans le support de capteur (12) après l'application de la surface inférieure (14) du support de capteur sur la portion interne du pneu pour coller le support de capteur au pneu.

## Patentansprüche

1. Verfahren zum Befestigen einer Sensorhalterung in einem Reifen, wobei:
- ein Reifen (1) vorgesehen wird,
- eine Sensorhalterung (12) vorgesehen wird, die ein Gehäuse (13) aufweist, in dem ein Sensor befestigt werden soll, und der eine untere Fläche (14) aufweist, die mit einem Klebstoff (14a) versehen wird, der dazu ausgebildet ist, die Sensorhalterung an den Reifen zu kleben,
und wobei der Klebstoff ein druckempfindlicher Klebstoff (PSA) mit einer Silikonbasis ist, wobei das Verfahren **dadurch gekennzeichnet ist, dass** der Klebstoff eine Dicke aufweist, die folgendes umfasst:
- die untere Fläche der Sensorhalterung wird mit einem Druck zwischen 0,05 MPa und 1 MPa für eine Dauer von weniger als 1 Minute auf einen Innenabschnitt des Reifens gedrückt, um die Sensorhalterung am Reifen zu befestigen.

2. Verfahren nach Anspruch 1, wobei das Aufbringen der Sensorhalterung (12) auf den Innenabschnitt des Reifens bei Raumtemperatur ohne Wärmezufuhr, d. h. zwischen 15 °C und 35 °C, erfolgt.

3. Verfahren nach Anspruch 1 oder Anspruch 2, wobei das Aufbringen der Sensorhalterung (12) auf den Innenabschnitt des Reifens mit Hilfe eines Werkzeugs erfolgt, das so beschaffen ist, dass es den Druck zwischen der Sensorhalterung und dem Reifen ausübt.

4. Verfahren nach Anspruch 3, wobei das Werkzeug auch dazu ausgebildet ist, die Sensorhalterung in Bezug auf den Reifen zu positionieren.

5. Verfahren nach einem der Ansprüche 1 bis 4, wobei vor dem Aufbringen der Sensorhalterung (12) auf den Innenabschnitt des Reifens der Innenabschnitt des Reifens mit einem Reifenreinigungsmittel gereinigt wird.

6. Verfahren nach Anspruch 5, wobei das Reifenreinigungsmittel in einer Liste enthalten ist, umfassend Wasser, heißes Wasser, Wasser mit einem Lösungsmittel, Lösungsmittel.

7. Verfahren nach einem der Ansprüche 1 bis 6, wobei die Sensorhalterung (12) ferner einen Schutzfilm auf dem Klebstoff umfasst, wobei der Klebstoff sich dann zwischen der unteren Fläche und dem Schutzfilm befindet, um ihn vor der äußeren Umgebung zu schützen, bevor die Sensorhalterung auf den Innenabschnitt des Reifens aufgebracht wird, und der Schutzfilm unmittelbar vor dem Aufbringen der Sensorhalterung auf den Innenabschnitt des Reifens von der Sensorhalterung entfernt wird, weniger als 5 Minuten vor diesem Aufbringen.

8. Verfahren nach einem der Ansprüche 1 bis 7, wobei die Sensorhalterung eine Hülle (12e) umfasst, die durch ein Formverfahren hergestellt wird.

9. Verfahren nach Anspruch 8, wobei die Hülle (12e) aus einem Polymer wie einem Elastomer, Gummi oder Naturkautschuk hergestellt wird.

10. Verfahren nach einem der Ansprüche 8 oder 9, wobei die untere Fläche (14) Rauheiten aufweist, die durch die entsprechende Fläche der Form hergestellt werden.

11. Verfahren nach einem der Ansprüche 1 bis 10, wobei die Sensorhalterung (12) durch die folgenden aufeinanderfolgenden Herstellungsschritte hergestellt wird:
- Herstellung einer Sensorhalterungshülle (12e),
- Reinigung der unteren Fläche der Sensorhalterungshülle mit einem Sensorhalterungsreinigungsmittel, wobei das Halterungsreinigungsmittel ein Lösungsmittel ist, und
- Aufbringen des Klebstoffs auf die zuvor gereinigte unter Fläche.

12. Verfahren nach einem der Ansprüche 1 bis 10, wobei die Sensorhalterung (12) mittels der folgenden aufeinanderfolgenden Herstellungsschritte hergestellt wird:
- Herstellung einer Sensorhalterungshülle (12e), und
- Abschleifen der unteren Fläche der Sensorhalterungshülle und Entfernen von Rückständen des vorherigen Abschleifens von der unteren Fläche, und
- Aufbringen des Klebstoffs auf die zuvor abgeschliffene untere Fläche.

13. Verfahren nach einem der Ansprüche 1 bis 10, wobei die Sensorhalterung (12) durch Aufbringen des Klebstoffs auf die untere Fläche einer Sensorhalterungshülle unmittelbar nach der Herstellung der Sensorhalterungshülle durch ein Gießverfahren, weniger als 5 Minuten nach dem Gießen, hergestellt wird.

14. Verfahren nach einem der Ansprüche bis 13, wobei:
- ein Sensor (11) vorgesehen wird, der dazu ausgebildet ist, wenigstens eine physikalische Größe in dem Reifen zu messen,
- der Sensor (11) in einer Sensorhalterung (12) befestigt wird, um eine Unterbaugruppe (10) zu bilden, bevor die untere Fläche (14) der Sensorhalterung auf den Innenabschnitt des Reifens aufgebracht wird, um die Sensorhalterung und die Unterbaugruppe an den Reifen zu kleben.

15. Verfahren nach einem der Ansprüche 1 bis 13, wobei:
- ein Sensor (11) vorgesehen wird,
- eine Sensorhalterungshülle (12e) vorgesehen wird,
- der Sensor (11) in der Sensorhalterungshülle (12e) befestigt wird und
- der Klebstoff (14a) auf der unteren Fläche (14) hinzugefügt wird, um eine Unterbaugruppe (10) zu bilden, bevor die untere Fläche (14) der Sensorhalterung auf den Innenabschnitt des Reifens aufgebracht wird, um den Sensorträger und die Unterbaugruppe an den Reifen zu kleben.

16. Verfahren nach einem der Ansprüche 1 bis 13, wobei:
- ein Sensor (11) vorgesehen wird, der dazu ausgebildet ist, wenigstens eine physikalischen Größe in dem Reifen zu messen, und
- der Sensor (11) in der Sensorhalterung (12) nach dem Aufbringen der unteren Fläche (14) der Sensorhalterung auf den Innenabschnitt des Reifens befestigt wird, um die Sensorhalterung an den Reifen zu kleben.

## Claims

1. **Method for attaching** a sensor support in a tire, wherein
- a tire (1) is provided,
- a sensor support (12) is provided, having a housing (13) in which a sensor is intended to be attached and having a lower surface (14) provided with an adhesive (14a) suitable for gluing the sensor support to the tire, and
wherein the adhesive is a pressure-sensitive adhesive (PSA) with a silicone base,
said method being **characterized in that** the adhesive has a thickness of between 30 um and 600 µm, and
- the lower surface of the sensor support is applied to an internal portion of the tire with a pressure of between 0.05 MPa and 1 MPa for a duration of less than 1 minute, in order to attach said sensor support to the tire.

2. Method according to claim 1, wherein the application of the sensor support (12) to the internal portion of the tire is performed at ambient temperature with no added heat, meaning between 15°C and 35°C.

3. Method according to claim 1 or claim 2, wherein the application of the sensor support (12) to the internal portion of the tire is performed by means of a tool suitable for applying said pressure between the sensor support and the tire.

4. Method according to claim 3, wherein the tool is also suitable for positioning the sensor support relative to the tire.

5. Method according to one of claims 1 to 4, wherein, before the application of the sensor support (12) to the internal portion of the tire, said internal portion of the tire is cleaned with a tire cleaning product.

6. Method according to claim 5, wherein the tire cleaning product is comprised in a list including water, hot water, water with a solvent, and a solvent.

7. Method according to one of claims 1 to 6, wherein the sensor support (12) further comprises a protective film on the adhesive, the adhesive then being between said lower surface and said protective film, in order to protect against the outside environment before the application of the sensor support to the internal portion of the tire, and said protective film is removed from the sensor support immediately before application of the sensor support to the internal portion of the tire: less than 5 minutes before said application.

8. Method according to one of claims 1 to 7, wherein the sensor support comprises an envelope (12e) produced by a molding process.

9. Method according to claim 8, wherein the envelope (12e) is made of a polymer, such as an elastomer, rubber, or natural rubber.

10. Method according to one of claims 8 and 9, wherein the lower surface (14) comprises roughnesses created by the corresponding surface of the mold.

11. Method according to one of claims 1 to 10, wherein the sensor support (12) is produced by the following successive production steps:
- a sensor support (12e) envelope is created,
- the lower surface of said sensor support envelope is cleaned with a sensor support cleaning product, said support cleaning product being a solvent, and
- the adhesive is applied to this previously cleaned lower surface.

12. Method according to one of claims 1 to 10, wherein the sensor support (12) is produced by the following successive production steps:
- a sensor support (12e) envelope is created, and
- abrasion of the lower surface of said sensor support envelope is performed, and said lower surface is cleared of residues from the preceding abrasion, and
- the adhesive is applied to the previously abraded lower surface.

13. Method according to one of claims 1 to 10, wherein the sensor support (12) is created by applying the adhesive to the lower surface of a sensor support envelope immediately after producing said sensor support envelope via a molding process: less than 5 minutes after said molding.

14. Method according to one of claims 1 to 13, wherein:
- a sensor (11) is provided that is suitable for measuring at least one physical quantity in the tire, and
- the sensor (11) is attached in the sensor support (12) so as to form a sub-assembly (10) before the application of the lower surface (14) of the sensor support to the internal portion of the tire in order to glue the sensor support and said sub-assembly to the tire.

15. Method according to one of claims 1 to 13, wherein:
- a sensor (11) is provided,
- a sensor support (12e) envelope is provided,
- the sensor (11) is attached in the sensor support (12e) envelope, and
- adhesive (14a) is added to the lower surface (14) to form a sub-assembly (10) before the application of the lower surface (14) of the sensor support to the internal portion of the tire in order to glue the sensor support and said sub-assembly to the tire.

16. Method according to one of claims 1 to 13, wherein:
- a sensor (11) is provided that is suitable for measuring at least one physical quantity in the tire, and
- the sensor (11) is attached in the sensor support (12) after the application of the lower surface (14) of the sensor support to the internal portion of the tire in order to glue the sensor support to the tire.
